Europäisches Patentamt

European Patent Office

Office européen des brevets

(19)

(11) Publication number: **0 379 833**

**A1**

(12) **EUROPEAN PATENT APPLICATION**

(21) Application number: **89730017.4**

(51) Int. Cl.⁵: **B29B 7/76**

(22) Date of filing: **24.01.89**

(43) Date of publication of application:
**01.08.90 Bulletin 90/31**

(84) Designated Contracting States:
**AT BE CH DE ES FR GB GR IT LI LU NL SE**

(71) Applicant: **Reilly, Bernard J.**
**1647 Locust**
**Troy Michigan 48098(US)**

(72) Inventor: **Reilly, Bernard J.**
**1647 Locust**
**Troy Michigan 48098(US)**

(74) Representative: **Pfenning, Meinig & Partner**
**Kurfürstendamm 170**
**D-1000 Berlin 15(DE)**

(54) **Injection molding mixing head and metering valve.**

(57) An injection molding mixing head and metering valve for forming a chemically reactive mixture of two fluid streams in a mixing chamber. A reciprocal piston rod (48) attached to a movable piston (42) mounted within a body controls the ingress of the fluid streams into the mixing chamber by opening and closing orifices formed in a carbide sleeve (52) mounted within the mixing chamber and disposed communication with the fluid stream inlet passages. A metering valve (90,92) is mounted within each inlet passage and is adjustably positionable with respect to the first and second orifices to vary the cross section of the orifice and thereby provide a precisely measured quantity of fluid flow through each orifice. Return passageways are formed in the body in communication with the inlet passages and outlets in the body for discharging excess fluid stream material from the first and second passageways when the piston rod has moved to a piston closing the orifices from the mixing chamber. A movable plunger (142) is mounted within each return passageway and, by cam action (150) engagement with the piston rod selectively blocks or opens the return passageways for excess fluid stream flow.

FIG-2

## INJECTION MOLDING MIXING HEAD AND METERING VALVE

### BACKGROUND OF THE INVENTION

Field of the Invention:

This invention relates, in general, to injection molding apparatus and, more specifically, to injection molding apparatus for metering two fluid streams into a mixing head prior to injection of the mixture into a mold cavity.

Description of the Prior Art;

In molding plastic parts, a heated plastic material stream is injected into a mold under pressure after which solidification occurs to form a part(s). Recently, reaction injection molding (RIM) has become popular due to its lower cycle times and resultant lower part cost.

In a reaction injection molding process, two liquid streams consisting of a polyol pre-mix and a isocynate or an isocyante pre-polymer are metered into a mix head and then delivered into the mold. The mixture takes the form of the mold, reacts and gels rapidly into a resilient or rigid plastic depending upon the formulation used.

The mix head is typically a housing containing a piston movably mounted within a chamber or bore formed in the housing. A rod is mounted on the end of the piston and extends through a second bore formed in the housing. Two inlets and an outlet are formed in the housing in communication with the second bore, with each inlet connected to a pressurized material stream and the outlet connected to the mold.

The rod selectively opens and closes the inlets to the second bore in the housing thereby enabling the flow of plastic material from the inlets through the bore into the mold or closing off the bore from the inlets.

In previously devised nozzles for reaction injection molding machines, the opening of the inlet into the bore allows material to flow into the bore until the rod closes the inlet at the end of the "shot" cycle. The closure of the inlet at the end of the "shot" cycle causes a pressure drop in the inlet conduit requiring a susbequent pressure build up for the next "shot" cycle. This increases the cycle time of the molding process and reduces the number of parts that can be made on the molding machine.

Thus, it would be desirable to provide a nozzle for a reaction injection molding machine which overcomes the problems of previously devised nozzles. It would be desirable to provide a nozzle for a reaction injection molding machine which eliminates the need to switch of mix head for different parts on a single molding despite the different material quantities and flow rates required for each different part. It would also be desirable to provide a nozzle for a reaction injection molding machine which can be adjusted with respect to the quantity of material and the material flow rate required for each part.

### SUMMARY OF THE INVENTION

The present invention is an injection molding mixing head and metering valve which produces a chemically reactive mixture of at least two fluid streams prior to the injection of the mixture into a mold cavity. The mixing head is in the form of a body having first and second inlets and an outlet. A first through bore is formed in the body. A hollow sleeve is mounted within the first through bore are defines a mixing chamber The mixing chamber is disposed in fluid flow communication with the outlet of the body. First and second orifices are formed in the sleeve and communicate through the sleeve with the mixing chamber. First and second passage ways extend through the body from the first and second inlet to the first and second orifices to form flow paths for two fluid streams into the mixing chamber.

A rod is slidably disposed within the mixing chamber. A fluid chamber is formed in the body co-axially with the mixing chamber and has a piston reciprocally mounted therein with the rod being attached to one face of the piston. Reciprocation of the piston via pressurized fluid causes movement of the piston rod within the sleeve between a first position in which the rod is spaced from the first and second orifices to open the orifices to the sleeve for fluid flow into the mixing chamber and a second position in which the rod closes off the orifices thereby preventing fluid flow into the mixing chamber.

Valve means are mounted within the first and second passage ways for metering the quantity of fluid flow streams through the first and second orifices into the mixing chamber. In a preferred embodiment, the valve means comprises an elongated pin having a tip end which is adjustably positionable with respect to the orifices to control the cross section of the orifices to thereby control the metering of precise quantities of fluid flow streams through the first and second orifices.

The outermost end of the elongated pin which extends outward from the body is provided with a plurality of external threads. A rotatable knob having a plurality of internal threads is mounted above the exterior end of the pin such that rotation of the knob causes longitudinal movement of the pin within the inlet passageway to thereby adjust the position of the tip end of the pin with respect to the orifice. A seal is mounted intermediately on the pin between the threads on the pin and the inlet.

A pair of return passage ways are formed in the body in communication with the first and second inlet passageways and the outlet formed in the body to form a return flow path for excess fluid stream material after the rod has closed off the orifices in the sleeve. A plunger is reciprocally mounted within a portion of the return passageways. The plunger has a through bore extending therethrough which forms a part of the return passageway. One end of the plunger is in the form of a cam which extends outward from the passageway into the first through bore in the body. A cam surface mounted on the rod slidably engages the cam on the plunger upon movement of the rod between the first and second positions. The engagement between the cam surface and the cam on the plunger causes the plunger to reciprocate within the return passageway from a first position in which the internal bore in the plunger forms a continuous extension of the return passageway and a second position in which the plunger closes off the return passageway. When the plunger blocks the return passageway, the fluid streams are injected into the sleeve. This maintains constant pressure on the fluid flow passageways thereby reducing cycle time and the need for a pressure build-up prior to each "shot" of the mixture into the mold.

The injection molding mixing head and metering valve of the present invention overcomes many of the problems encountered with previously devised injection molding apparatus insofar as precisely controlling the quantity of fluid streams injected into the mixing head. The metering valve of the present invention provides precise adjustment of the quanity of fluid stream injected into the mixing chamber thereby enabling a single mixing head to be utilized for numerous different size parts and quantity shot loads. This compares favorably with prior art injection molding apparatus which requires different mixing heads for each different part which was to be molded on a single molding machine.

The provision of return passageways having a movable plunger mounted therein which blocks off the passageway while the fluid streams are being injected into the mixing head maintains a constant pressure on the fluid system thereby eliminating the need for a pressure build-up prior to each shot cycle as required in previously devised mixing heads. This reduces the overall molding cycle time and thereby increases production rates.

## BRIEF DESCRIPTION OF THE DRAWING

The various features, advantages and other uses of the present invention will become more apparent by referring to the following detailed description and drawing in which:

Figure 1 is an end view of the injection molding mixing head and metering valve of the present invention;

Figure 2 is a cross sectional view generally taken along line 2-2 of Figure 1 showing the internal construction of the mixing head and needle valve, with the injection piston being in its forward, injection position;

Figure 3 is a cross sectional view generally taken along line 3-3 of Figure 1 showing the material inlet passageways;

Figure 4 is a partial, enlarged view of the sleeve and needle valve assembly of the present invention;

Figure 5 is a further enlarged view showing the relationship between the adjustable valve and orifice in the sleeve of the present invention;

Figure 6 is a cross sectional view, generally similar to Figure 2, but showing the injection piston in its retracted position;

Figure 7 is a cross sectional view of alternate valve means which may be employed in the mixing head of the present invention; and

Figure 8 is a cross sectional view generally taken along line 8-8 of Figure 7.

## DESCRIPTION OF THE PREFERRED EMBODIMENTS

Throughout the following description and drawing, an identical reference number is used to refer to the same component shown in multiple figures of the drawing.

The present invention is an injection molding mixing head and metering valve which produces a chemically reactive mixture of at least two fluid streams, such as a first fluid stream of a polyol pre-mix and a second fluid stream of an isocyanate or an isocyanate pre-polymer. The fluid streams are metered into a mixing head prior to injection into a mold cavity. The mixture takes the form of the mold cavity, reacts and gels rapidly into a resilient or rigid plastic form depending upon the formulation employed.

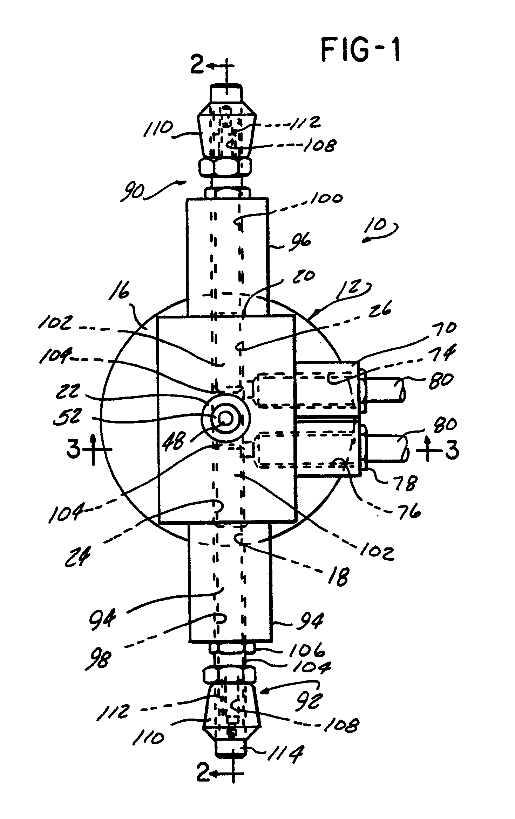

Referring now to the drawing and to Figures 1, 2 and 3 in particular, there is illustrated an injection molding mixing head 12 in the form of a body having first and second sections 14 and 16, respectively. The first section 14 of the body 12 has a generally rectangular form with a rectangular cross section as shown in Figure 1. The second portion or section 16 of the body 12 has a circular cross section.

First and second inlets 18 and 20, respectively, are formed in the first section 14 of the body 12. An outlet 22 is also formed in one end of the first portion 14 of the body 12.

First and second inlet passageways 24 and 26, respectively, are formed in the body and communicate at one end with the first and second inlets 18 and 20, respectfully.

A first through bore 28 is formed interiorially within the body 12. The first through bore 28 is formed with a first reduced cross sectional portion 30 and a second, enlarged cross sectional portion 32.

A fluid chamber 24 is formed within the body 12 coaxially with the first through bore 28 and lies adjacent to the enlarged cross sectional section 32 of the first through bore 28. The fluid chamber 34 is provided with an inlet and an outlet 36 and 38, respectively, which provide inlet and discharge passages for pressurized fluid to and from the fluid chamber 34.

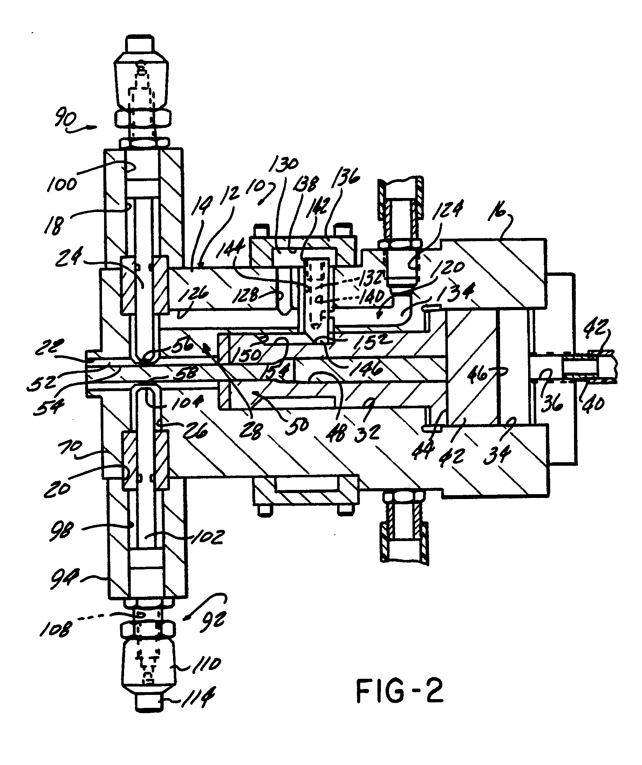

As shown in Figure 2, the inlet 36 and outlet 38 to the fluid chamber 34 are provided with suitable fittings 40 for connecting the inlet 36 and outlet 38 to conduits or hoses 42.

A piston 44 is reciprocally mounted within the fluid chamber 34. The piston 42 is in the form of a solid body having opposed faces 44 and 46. The inlet 36 and outlet 38 in the fluid chamber 34 are positioned on opposite sides of the piston 42 so as to enable pressurized fluid to be sequentially admitted and exhausted from the fluid chamber 34 on opposite faces 44 and 46 of the piston 42 to cause reciprocal movement of the piston 42 within the fluid chamber 34.

An elongated piston rod 48 is attached to one face 44 of the piston 42 slidably extends through the first through bore 28 in the body 12. A cam member 50 is affixed to a portion of the rod 48 for purposes which will be described in greater detail hereafter.

A hollow sleeve 52 is mounted within the reduced cross section portion 30 of the first through bore 28. The sleeve 52 is provided with a through bore 54 which forms a mixing chamber within the body 12. The outermost ends of the piston rod or plunger 48 slidably extends through the sleeve 52.

First and second orifices 56 and 58, respectively, are formed in the side walls of the sleeve 52. The first and second orifices 56 and 58 are disposed in fluid flow communication with the first and second inlet passageway 24 and 26, respectively, to provide fluid flow path for the fluid flow streams from the first and second inlets 18 and 20 in the body 12 through the first and second inlet passageway 24 and 26 and the orifices 56 and 58 into the mixing chamber 54 wherein the fluid streams react to form a mixture which is to be injected through the outlet 22 of the body 12 into a mold cavity, not shown.

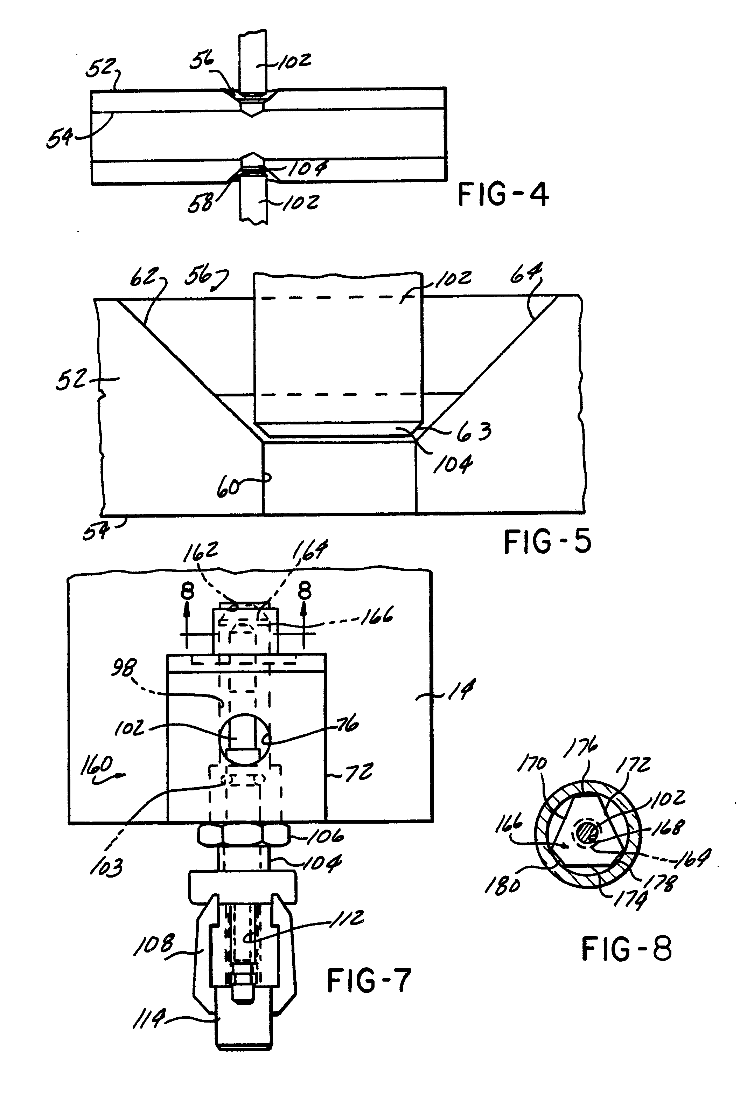

Referring briefly to Figures 4 and 5, there is shown an enlarged view of one of the identically constructed orifices such as orifice 56 in the sleeve 52. Each of the orifices, such as orifice 56, is provided with a first portion 60 having a circular cross section. The first portion 60 is disposed in communication with the mixing chamber 54. Contiguous with the first portion 60 is a second portion 62 which is provided with inwardly tapering side walls 62. The second portion of the orifice 56 has a first cross sectional configuration identical to the cross section of the first portion 60 contiguous therewith. The outermost portion of the second portion of the orifice 56 has an enlarged diameter with the side walls 62 extending inwardly from the second end 64 to the first end. 63 of the second portion 62 of the orifice 56.

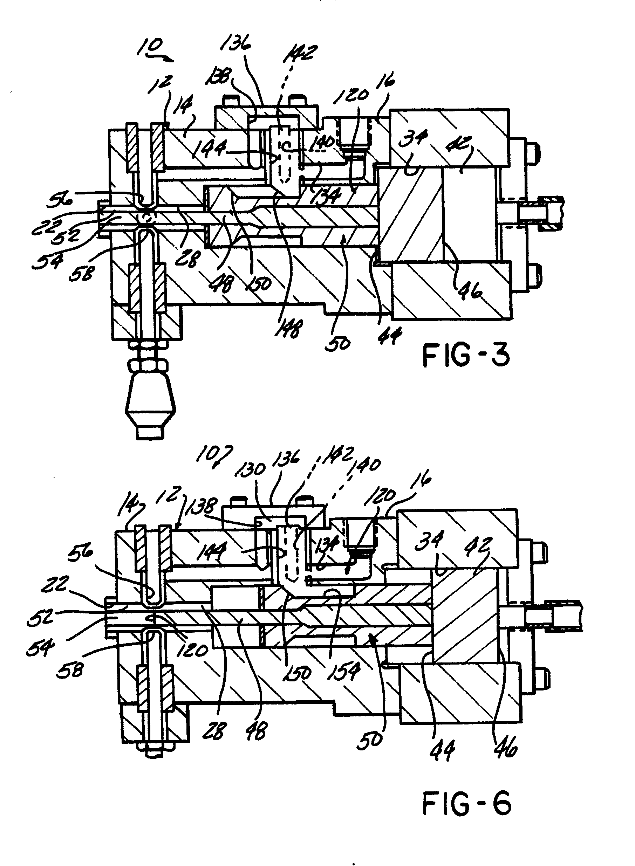

Referring now to Figures 1 and 3, the body 12 is provided on its first portion 14 with first and second manifolds 70 and 72, respectively. Each of the manifolds 70 and 72 is provided with an internal bore 74 and 76, respectively, which is disposed in fluid flow communication with the inlets 18 and 20, respectively, as well as the first and second inlet passage ways 24 and 26 to form flow paths for the fluid streams through the body 12. Suitable connections 78 are mounted on the manifold 70 and 72 for connecting a fluid flow conduit, such as a pipe or hose, 80, to either of the manifolds 70 and 72.

As noted above, the injection molding mixture head 10 of the present invention is provided with metering valve means 90 and 92 which precisely meters a pre-determined quantity of one of the fluid streams into the mixing chamber 54. The metering valves 90 and 92 are positioned in the first and second inlet passageways 24 and 26, respectively, and are adjustable in position with respect to the first and second orifices 56 and 58 so as to control the cross section of the orifice to cause a predetermined quantity of the fluid stream to flow into the mixing chamber through the orifice.

In a preferred embodiment, the manifolds 94 and 96 are mounted on the body 12 and include a through bore 98 and 100, resepctively. Each of the through bores 98 and 100 communicates with the first inlet passage 24 and 26, respectively, in the body 12.

Each of the valve means 90 and 92 includes an elongated pin 102 which is adjustably positioned within the through bores 98 and 100. Each of the pins 102 is provided with a tip end 104, the construction of which will be described in greater detail hereafter. A plug 104 and a lock nut 106 are utilized to position the pin 102 within the through bores 98 and 100. The plug 104 is threaded into each of the through bores 98 and 100 at one end, with the second end extending outward therefrom.

Referring to Figures 4 and 5, the tip end 104 of the pin 102 is provided with an inwardly tapering end which provides a constant spacing between the end 104 of the pin 102 and the tapering side walls 62 of either orifice 56 and 58. This provides a concise and constant metering of the quantity of the fluid stream flowing around the pins 102 through the orifice 56 and 58 into the mixing chamber 54.

As shown in Figures 1 and 2, the outermost ends of the pins 102 are provided with a plurality of external threads 108. A rotatable knob 110 is mounted on the outer end of the pin 102 by means of internal threads 112. The internal threads 112 on the knob 110 are reversed or spiral in an opposite direction from the threads 108 on the pin 102. In this manner, rotation of the knob 110 in one direction about a central axis will result in movement of the pin 102 within the through bores 98 or 100 into or out of the through bores 98 and 100. This adjusts the position of the tip end 104 of the pins 102 with respect to the orifices 56 and 58 to provide the desired metered quantity of fluid stream flow into the mixing chamber 54. An indicator 114 mounted on the outermost end of the knob 110 is provided with a plurality gradations so as to provide an indication of the relative position of the pin with respect to the orifices 56 and 58 and the selected quantity of fluid flow into the orifice.

In conjunction with Figures 2 and 6, a brief description of the operation of the mixng head will now be provided. In Figure 6, the piston 42 is shown in its first or retracted position within the fluid chamber 34. In this position, the outermost end 120 of the rod 48 attached to the piston 42 has retracted within the first through bore to a position where it is spaced from the orifices 56 and 58. This opens the orifices 56 and 58 to the mixing chamber 54 and enables the flow of the fluid streams through the first and second inlet passages 18 and 20 into the mixing chamber 54 wherein the fluid streams chemically react. Reversal of the direction of pressurized fluid into the fluid chamber 34, such that the pressurized fluid is directed onto the face 46 of the piston 42 and on the opposite face 44 of the piston 42 is unpressurized causes movement of the piston 42 and rod 48 within the fluid chamber 34 and the first through bore 28 in the body 12 to the position shown in Figure 2. During such movement, the rod 48 will close off the orifices 56 and 58 from the mixng chamber 54 and, concurrently, inject the mixture of the two fluid streams through the outlet 22 in the body 12 into the mold cavity, not shown. Subsequent retraction of the piston 42 will reverse the above-described sequence to enable the next mixture to be formed within the mixing chamber 54.

As also shown in Figures 2 and 6, the body 12 is provided with first and second return passageways, denoted in general by reference number 120 and 122 respectively. Since the return passageways 120 and 122 are identically constructed, a description of only one return passageway, such as return passageway 120, will be provided.

The return passageway 120 is disposed in fluid flow communication with the first inlet passage 18 and an outlet 124 formed in the body 12. The return passageway 120 acts as a return or exhaust path for excess fluid stream material from the first passageway 18 to supply reservoir, not shown, after the rod 48 has closed off the orifice 56. This creates a closed system which maintains constant pressure on the fluid stream between each "shot" of the mixture of the fluid streams into the mold cavity.

The return passageway 120 is formed of a plurality of sections, such as a first section 126, a second section 128, a third section 130, a fourth section 132 and a fifth section 134. The first and second sections 126 and 128 are formed with perpendicularly disposed bores within the body 12. The third section 130 of the return passageway 120 is formed by mounting a cap assembly 136 on the body 12 which has an internal cavity 138 formed therein. The internal cavity 138 forms the third section 130 of the return passageway 120 between itself and the outer surface of the body 12. The fourth section 132 of the return passageway 120 is formed by a through bore 140 in a movable plunger 142.

The plunger 142 is formed of an elongated body which is reciprocally mounted within a bore 144 in the body 12. The plunger 142, as noted above, is provided with a through bore 140 which extends between the third section 130 and the fourth section 134 of the return passageway 120.

One end 146 of the plunger 142 is formed with an inclined cam 148 which extends outward from the return passageway 120 into the enlarged cross section portion 32 of the first through bore 28. The cam 140 on the plunger 142 is configured to co-act with a complimentary formed cam surface 150 which is formed on the body member 50 attached to the piston rod 48.

In operation, when the piston 42 has been moved to its forward position to eject the mixture into a mold and closes off the orifices 56 and 58, the cam surface 150 will be spaced forward of the cam 148 of the plunger 142 enabling downward movement of the plunger 142 into the enlarged portion 32 of the first through bore 28 until the outermost end 152 of the plunger 142 slidably rests upon a flat surface 154 formed on the body 50. In this position, the hollow bore 140 within the plunger 142 is open to the fifth section 134 of the return passageway thereby forming a continuous flow path through the return passageway 120 between the first inlet passageway 24 and the outlet 124 on the body 12 for the discharge of excess fluid material from the body 12 to a supply reservoir, not shown.

As shown in Figure 6, movement of the piston 42 to its retracted position shown in Figure 6 causes movement to the right, as viewed in Figure 6, of the body 50 attached to the piston rod 48. During such retraction movement, the cam surface 150 on the body 50 will engage the cam 148 on the plunger 142 and cause upward movement, as viewed in Figure 6, of the plunger 142 in the bore 144 formed in the body until the plunger 142 engages the cap member 136. At this point, the outlet from the through bore 140 and the plunger 142 is spaced from the fifth section 134 of the return passageway 120 thereby blocking the flow of fluid through the passageway 120. This maintains the fluid stream in a pressurized state such that the fluid stream flows through the first inlet passageway 24 into the mixing chamber 54 as described above.

Referring now to Figures 7 and 8, there is illustrated an alternate metering valve which may be employed in the injection molding mixing head of the present invention. The metering valve 160 is substantially identical to the metering valves 90 and 92 described above insofar as containing an elongated pin 102 which is mounted within the manifold, not shown, attached to the first portion 14 of the body 12. The pin 102 is held in the desired position by means of a connector 104 and lock nut 106. A rotatable knob 108 is provided with internal threads threadingly engage threads formed on the exterior end of the pin 102 to cause longitudinal movement of the pin 102 within the through bore 98 formed in the body and manifold, as described above. The pin 102 is also provided with a seal 103 which is mounted between the inlet passage way 76 and the threads 112 on the pin 102 to prevent the fluid stream from flowing onto the threaded portion of the pin 102.

However, in this embodiment, the forwardmost end of the through bore 98 is formed with an inwardly tapering, conical end portion 162. The outermost end 162 of the tapering end portion 162 forms an orifice which is disposed in fluid flow communication with the mixing chamber 54.

A carbide insert 166 is mounted at the end of the through bore 98 adjacent the conical portion 162 as shown in Figure 8. The carbide insert 166 is provided with a central aperture 168 through which the pin 102 slidingly extends. The insert 166 is formed of a high strength material, such as carbide, to resist corrosion and deterioration over long term use.

The insert 166 has a substantially triangular form with three side walls 170, 172 and 174. The apexes of the triangular form are truncated to form shorter side walls 176, 178 and 180 between the longer side walls 170, 178 and 180. The shorter walls 176, 178, and 180 engage the side walls of the through bore 98 in the body. However, the longer side walls 170, 172 and 174 are spaced from the interior surface of the through bore 98 to form flow passages for the flow of fluid stream material from the inlet passage 76 around the pin 102 and insert 166 and through the outlet orifice 164 of the valve 160. The metering valve shown in Figure 7 and 8 is intended for use as a fixed valve with the carbide insert providing high strength resistance to deterioration and corrosion.

In summary, there has been disclosed a unique injection molding mixing head and metering valve which provides significant improvements over previously devised mixing heads and metering valves. The metering valve employed in the mixing head of the present invention enables a precise metering of quantities of fluid streams into the mixing chamber to be obtained. The metering valve is adjustably positioned within the body of the mixing head so as to enable the position of the tip end of the valve to be selectively adjusted with respect to the inlet orifice into the mixing chamber thereby controlling the quantity of fluid which flows into the mixing chamber. This enables a single mixing head to be utilized to form different sized parts requiring different quantities of fluid materials without the need to use separate mixing head for each part. This eliminates the need to replace the mixing head when other parts requiring different shot rates and material quantities are to be made.

The unique mixing head of the present invention also includes a return passageway for excess fluid material between each shot cycle which includes a movable plunger which blocks off the return passageway during the flow of fluid material into the mixing chamber. This maintains the pressure of the fluid stream at a constant pressure level during and between each shot cycle and eliminates the pressure drop encountered is previously devised mixing heads which has resulted in lower production rates and cycle times.

## Claims

1. An injection molding mixing head for producing a chemically reactive mixture of at least two fluid streams comprising:
a body having first and second inlets and an outlet;
a first through bore formed in the body;
a hollow sleeve mounted within the first through bore and defining a mixing chamber therein, the mixing chamber being disposed in communication within the outlet of the body;
first and second orifices formed in the sleeve and communicating throught the sleeve with the mixing chamber;
first and second passageways extending through the body and connecting the first and second inlet and the first and second orifices in fluid flow communication for the flow of fluid streams into the mixing chamber;
a rod slidably disposed within the mixing chamber, the rod having the same cross section as the mixing chamber;
a fluid chamber formed within the body co-axial with the mixing chamber;
piston means reciprocally mounted within the fluid chamber, the piston means having opposed faces, one of which is secured at one end of the rod;
pressurized fluid inlet and outlet means formed within the body in fluid flow communication with the fluid chamber for sequentially admitting and exhausting pressurized fluid from opposed faces from the piston means to cause reciprocal movement of the piston means within the fluid chamber and the reciprocal movement of the rod from a first position within the mixing chamber opening the first and second orifices to the mixing chamber for fluid stream flow from the first and second passageways into the mixing chamber to a second position in which the piston rod closes off the first and second orifices from the mixing chamber to stop the flow of fluid streams into the mixing chamber and, concurrently, ejects the chemically reactive mixture of the first and second fluid stream in the mixing chamber through the outlet in the body; and
valve means mounted within the first and second passageways for metering the quantity of fluid stream through the first and second orifices into the mixing chamber, the valve means comprising:
a pin disposed within the passageways and having a tip end; and
means for adjusting the position of the tip end of the pin with respect to one of the first and second orifices.

2. The injection molding mixing head of Claim 1 wherein the means for adjusting the position of the tip end of the valve means comprises:
a through bore formed in the body intersecting one of the first and second passageways and disposed co-axially with one of the first and second orifices, the pin being disposed within the through bore and extending through a portion of one of the first and second passageways;
external threads formed on an end portion of the pin;
knob means mounted on the pin, the knob means having internal threads threadingly engaging the external threads on the pin such that rotation of the knob causes longitudinal movement of the pin within the through bore; and
sealing means mounted on the pin between the external threads and the juncture of the through bore and one of the first and second passageways to prevent the flow of fluid out onto the threads.

3. The injection molding mixing head of Claim 1 wherein the first and second orifices each comprise:
a straight through bore portion communicating with the mixing chambers; and
an inwardly tapering portion communicating with one of the first or second passageways and the straight through bore portion, the tapering portion having first and second ends, the first end having a diameter greater than the diameter of the straight through bore portion, the tapering portion having side walls tapering inwardly from the first to the second ends.

4. The injection molding mixing head of Claim 1 wherein the sleeve is formed of a carbide material.

5. The injection molding mixing head of Claim 1 further including:
return passageway means formed in the body and disposed in fluid flow communication with the first and second passageways and third and fourth outlets formed in the body for discharging excess fluid streams from the first and second passageways, respectively, and the body when the rod has closed off the flow of the first and second fluid streams through the first and second orifices into the mixing chamber.

6. The injection molding mixing head of Claim 5 wherein the return passageway means includes:
first and second return passageways disposed in fluid flow communication with one end of the first an second inlet passageways, respectively; and
third and fourth outlets formed in the body.

7. The injection molding mixing head of Claim 6 further including:
a plunger reciprocally mounted in the first and second return passageways, the plunger having a central through bore forming a part of the return passageway;
a cam portion formed on the plunger and extending out of the return passageway and into the first through bore in the body; and

a cam surface mounted on the rod and movable with the rod, the cam surface engaging and controlling reciprocal movement of the plunger within the return passageway between a first position in which the plunger completes a flow path through the return passageway when the rod is in the first position and a second position within which the plunger blocks the return passageway when the rod is in the second position.

8. An injection molding mixing head comprising:

a body having an inlet and an outlet;

a first through bore formed in the body;

a hollow sleeve mounted within the first through bore

and having a mixing chamber therein, the mixing chamber being disposed in communication within the outlet of the body;

an orifice formed in the sleeve and communicating through the sleeve with the mixing chamber;

a first passageway extending through the body and connecting the inlet and the orifice in fluid flow communication for the flow of fluid into the mixing chamber;

a rod slidably disposed within the mixing chamber, the rod having the same cross section as the mixing chamber;

a fluid chamber formed within the body co-axial with the mixing chamber;

piston means reciprocally mounted within the fluid chamber, the piston means having opposed faces, one of which is secured at one end of the rod;

pressurized fluid inlet and outlet means formed within the body in fluid flow communication with the fluid chamber for sequentially admitting and exhausting pressurized fluid from opposed faces from the piston means to cause reciprocal movement of the piston means within the fluid chamber and the reciprocal movement of the rod from a first position within the mixing chamber opening the orifice to the mixing chamber for fluid stream flow from the first passageway into the mixing chamber to a second position in which the piston rod closes off the orifice from the mixing chamber to stop the flow of fluid into the mixing chamber and, concurrently, ejects fluid in the mixing chamber through the outlet in the body;

a pin dipsoed in the first passageway and having a tip end, the tip end of the pin being disposed at a pre-determined distance from the orifice; and

a fluid control member mounted in the first passageway, the fluid control member having side edges spaced from the interior surface of the first passageway to define fluid flow paths, the fluid control member being formed of carbide.

9. The injection molding mixture head of Claim 8 wherein the fluid control member has a triangular form with first, secon and third side edges and first, second and third vertices, the vertices contacting the inerior surface of the first passageway and the first, second the third side edges defining fluid flow aperture in conjunction with the adjoining, spaced interior surface of the first passageway.

10. An injection molding mixture head for producing a chemically reactive mixture of at least two fluid streams comprising:

a body having first and second inlets and an outlet;

first and second inlet passageways disposed in fluid flow communication through the body with the first and second inlets in the body;

a mixing chamber formed in the body in fluid flow communication with the first and second inlet passageways and the outlet;

a rod slidably disposed within the mixing chamber and having the same cross section as the mixing chamber;

a fluid chamber formed within the body co-axially with the mixing chamber;

piston means reciprocally mounted within the fluid chamber, the piston means having opposed faces, one of which is secured at one end of the rod;

pressurized fluid inlet and outlet means formed within the body in fluid flow communication with the fluid chamber for sequentially admitting and exhausting pressurized fluid from opposed faces from the piston means to cause reciprocal movement of the piston means within the fluid chamber and the reciprocal movement of the rod from a first position within the mixing chamber opening the first and second orifices to the mixing chamber for fluid stream flow from the first and second passageways into the mixing chamber to a second position in which the piston rod closes off the first and second orifices from the mixing chamber to prevent the flow of the fluid streams into the mixing chamber and, concurrently, ejects the chemically reactive mixture of the first and second fluid streams in the mixing chamber through the outlet in the body;

third and fourth outlets formed in the body;

first and second return passageways formed in the body and disposed in fluid flow communication between the first and second inlet passageways and the third and fourth outlets for discharging excess fluid stream from the first and second inlet passageways, respectively, in the body when the rod has closed off the flow of the fluid streams through the first and second orifices into the mixing chamber; and

first and second means, disposed in the first and second passageways and responsive to reciprocal movement of the rod, for selectively opening and closing the return passageways for the flow of excess fluid streams therethrough when the rod is in its first position opening the first and second orifices to the mixing chamber for the flow of fluid streams therethrough.

11. The injection molding mixing head of Claim 10 wherein the first and second opening and closing means each comprises:

a plunger reciprocally mounted in the first and second return passageways, the plunger having a central throughbore forming a part of the return passageway;

a cam portion formed on the plunger and extending out of the return passageway and into the first throughbore in the body;

a cam surface mounted on the rod and movable with the rod, the cam surface engaging and controlling reciprocal movement of the plunger within the return passageway between a first position in which the plunger completes a flow path through the return passageway when the rod is in the first position and a second position within which the plunger blocks the return passageway when the rod is in the second position.

12. A needle valve for metering the quantity of a fluid stream which flows through an outlet passage in a body having an internal mixing chamber wherein the fluid stream forms a chemically reactive mixture with another fluid stream in the mixing chamber comprising:

a through bore formed in the body communicating with the mixing chamber;

a pin disposed in the through bore having first and second ends, the second end extending out of the body; the first end extending into the first end of the mixing chamber;

means for mounting the pin in the throughbore; and means attached to the second end of the pin for causing longitudinal movement of the pin upon rotation of the means within the through bore so as to adjust the position of the first end of the pin with respect to the inlet in the mixing chamber.

FIG-1

FIG-2

FIG-3

FIG-6

EP 0 379 833 A1

FIG-4

FIG-5

FIG-7

FIG-8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 162 130 (KRAUSS-MAFFEI)<br>* Page 5, lines 16-37; figures *<br>--- | 1-3,8,9<br>,12 | B 29 B  7/76 |
| A | PATENT ABSTRACTS OF JAPAN, vol. 10, no. 304 (M-526)[2360], 16th October 1986; & JP-A-61 116 505 (HITACHI) 04-06-1986<br>--- | 2 | |
| A | FR-A-2 334 482 (UPJOHN)<br>* Figures; page 4, lines 1-11 *<br>--- | 1-3,8,<br>12 | |
| A | DE-A-2 854 119 (DESMA-WERKE)<br>* Page 10, lines 24-32 *<br>--- | 1-3,8,<br>12 | |
| A | US-A-4 600 312 (SCRIVO)<br>* Column 3, lines 60-63; figures *<br>--- | 1,4 | |
| A | FR-A-2 299 578 (SECMER)<br>* Whole document *<br>--- | 5-7,10,<br>11 | |
| A | GB-A-2 090 763 (AFROS)<br>--- | | TECHNICAL FIELDS SEARCHED (Int. Cl.5) |
| A | DE-A-2 065 819 (KRAUSS-MAFFEI)<br>--- | | B 29 B |
| A | GB-A-2 015 888 (AFROS)<br>----- | | |

The present search report has been drawn up for all claims

| Place of search | Date of completion of the search | Examiner |
|---|---|---|
| THE HAGUE | 23-08-1989 | PEETERS S. |

EPO FORM 1503 03.82 (P0401)